# EUROPEAN PATENT SPECIFICATION

(11) **EP 0 584 381 B1**
(45) Date of publication and mention of the grant of the patent: **17.06.1998**
(21) Application number: 92114244.4
(22) Date of filing: 20.08.1992
(51) Int. Cl.: F16L 55/165

(54) **Method for installing plastic liners in a pipe**
Verfahren zum Installieren eines Plastikliners in einem Rohr
Méthode d'installation de revêtements internes en plastique dans un tuyau

(43) Date of publication of application: 02.03.1994
(73) Proprietor: Mandich, Ivan C., New Orleans, Louisiana 70118 (US)
(72) Inventor: Mandich, Ivan C., New Orleans, Louisiana 70118 (US)
(74) Representative: Eisenführ, Speiser & Partner

(56) References cited:
- EP-A- 0 290 184
- EP-A- 0 377 486
- EP-A- 0 479 386
- WO-A-90/12241
- DE-A- 3 519 439
- DE-A- 3 934 980
- FR-A- 1 354 210
- FR-A- 2 367 975
- GB-A- 1 580 438

## Description

This invention relates to a method of lining a pipe comprising the following steps:
a) providing a cylindrical first tubular liner of plastic material, the external diameter of said first liner corresponding to the internal diameter of said pipe to be lined;
b) providing a cylindrical second tubular liner of plastic material for closely fitting into said first liner;
c) ribs extending radially between the inner surface of the first liner and the outer surface of the second liner for spacing said liners relative to each other in the pipe.

One method and a respective linder for protecting the interior of pipe lines is tought by French patent 2 503 622, this method providing a cylindrical liner of plastic material having historic time memory properties, said liner being deformed to a pre-given reduced overall diameter an appropriate temperature, the deformed liner being introduced into the pipe line, and forcing hot steam of fluid into the liner sufficient to obtain an average crystallization temperature of the material so that the deformed liner assumes its original cylindrical shape, then pressure being applied within the liner to conform the liner to the interior contour of the pipe.

Another method for installing a plastic liner within a pipe is described in British patent specification 1 580 438 or in the PCT-application WO-A-87/03840, this known method using liners of semi-rigid plastics material, and providing the following steps: forceably mechanically collapsing the liner so as to form at least one longitudinally extending depression, fixing a longitudinally extending tearable strap to or about the liner so as to maintain the collapsed configuration, introducing the collapsed liner in its maintained collapsed configuration into the pipe for a desired distance along and within the pipe and releasing the strap in order to restore the tube to its original shape, thus making use of the spring rebounding effect of the liner material.

U.S. 5,034,180 discloses a method for installing a liner of plastic material in a pipe, said method using a thin flexible tubular membrane providing a heat containment tube for inserting into and inflation within an underground conduit to be repaired. The thermally deformed liner is inserted into the tube while hot and flexible. The tubular membrane is pressurized to exclude unwanted fluids from within the existing conduit. Then, hot steam is injected into the tube to heat the pipe full length externally and internally until it assumes its original circular shape, the liner being thereby expanded against the walls of the pipe, with a flexible tubular membrane therebetween.

All said known methods rely on the thermal deformation or mechanical collapsing of the plastic liners, and to the respective restoration of the deformed liner in the pipe, and this process is restricted to liners which do not exceed a pre-given wall thickness which prevents sufficient risk control and reliability of the lined pipe in some cases.

FR-A-1 354 210 discloses a tubular plastic pipe, including a cylindrical first tubular tube of deformable plastic material and a cylindrical second tubular tube of deformable plastic material closely fitted into said first tube, flexible ribs extending radially between the inner surface of the first tube and the outer surfache of the second tube for flexibly spacing the tubes relative to each other, this preventing sharp bents which would otherwise close the inner tube and cut off the fluid flow in the inner tube.

It is a general object of the present invention to provide a method for installing plastic liners in a pipe, said method increasing the reliability, safety and risk control of the lined pipe.

For this and other objects the invention provides a method of lining a pipe comprising the following steps:
a) providing a cylindrical first liner of plastic material, the external diameter of said first liner corresponding to the internal diameter of said pipe to be lined;
b) providing a cylindrical second liner of plastic material for closely fitting into said first liner;
c) ribs extending radially between the inner surface of the first liner and the outer surface of the second liner for spacing said liners relative to each other in the pipe;
said method being charaterized by
d) deforming or collapsing the first and the second liner to reduced overall diameters;
e) introducing the first liner into the pipe;
f) introducing the second liner into the first liner;
g) restoring the cylindrical shapes of said liners in the pipe to bring the first liner into contact with the internal surface of the pipe, and the second liner via the ribs into contact with the first liner.

The method of double liner-within-a-liner design and the respective liner arrangement is favoured in not only the rehabilitation of delapidated pipe lines but also in the installation of new pipe lines. The benefit of introducing two liners in the pipe, whereby ribs extend radially between the two liners consists of longitudinally extending continous holes between the inside of the first liner and the outside of the second liner, these holes allowing the insertion of a sensing system along the first liner to give information of any failure of the inner liner. By inserting two liners with a rib-structure between said liners, a large wall thickness can be established with liners each of which have a comparatively thin wall thickness and a corresponding flexibility which allows the installation of the liners into the pipes. Although there is avoidance of the massive wall and material use, the effective wall thickness is correspondingly increased. The holes provided by the rib-structure function as conveyors of potential problems which may exist in the pipe line.

In a preferred embodiment of the invention at least one of the liners consists of plastic material having historic time memory properties, and said liner being deformed at or above deforming temperature and below crystallization temperature of the material. The deformed liner in the pipe is restored to its cylindrical shape by forcing hot steam or fluid along the liner, the temperature of the steam or fluid being sufficient to obtain an average crystallization temperature of the plastic material so that the liner will restore to its circular cross-section and closely fit into the pipe.

When both liners consist of plastic material with historic time memory properties, then both liners are deformed thermally and mechanically at or above the deforming temperature and below the crystallization temperature of the liners. Then, the restoring of the cylindrical shapes of both liners is realized by pressing hot steam or fluid into the space between both liners. This processing has the benefit of reducing the volume of the necessary hot steam or liquid which economizes the overall production costs, reducing the steam or liquid requirement regardless of the size of the pipe.

To conform both liners to the interior contour of the pipe pressurized air or liquid is forced in the second liner after the heating of the liners above its crystallization temperature. By a first step, the second liner is pressed via the ribs against the first liner which closely conforms to the inner wall of the pipe.

To allow an easy installation of the second liner, it may be preferable to partially open the first liner after its installation in the pipe. For this, hot steam or fluid sufficient to obtain an average crystallization temperature of the plastic liner material is forced into the first liner after its introduction into the pipe, and the steam may be pressurized to partially widen the cross-section of the first liner to facilitate the introduction of the second liner.

In an preferred alternative, at least one of the liners consists of semi-rigid plastic material and is collapsed by mechanical force so as to form at least one longitudinally extending depression. To maintain the collapsed configuration, a longitudinally extending tearable strap is fixed to or about the liner, and said strap is torn off after the collapsed liner is introduced into the pipe or the first liner, respectively. As in all embodiments, ribs extend radially between the inner surface of the first liner and the outer surface of the second liner of force spacing said liners relative to each other, to restore the cylindrical shape of the liners, pressure may be exerted in the first and/or the second liner to support the spring rebounding effect by which immanent elastic spring forces bring the liner back to its circular cross-section.

It is particularly preferred to connect the two liners in a final step after both liners are - via the ribs - in intimate contact with each other. This connection can be made either by electro or heat fusion or welding, by glueing, bonding or mechanically snapping. This integral connection of both liners results in a high strength liner structure having a large effective wall thickness with the corresponding rigidity and strength, and yet avoiding the massive walls and corresponding amount of material, and simultaneously providing the longitudinal holes between the rib-structure which allows permanent failure control of the liners. For example by a fibre optic sensing system introduced in the longitudinal holes, it is possible to detect and pin-point leagues instantly. Thus, the inventive method allows for double containment protection of the pipe, high strength of a large effective wall thickness, disadvantages being realized with minimum material due to the rib-structure of the integrally connected first and second liners.

Preferably, fusion of the two liners is an electrofusion with wires embedded in the contact areas of said liners running in longitudinal direction of the liners from one end to the other, said wires being energized by electrical energy when the fusion is to be carried out.

As an alternative, the electro-fusion may be realized by using plastic material with electro-conductive restistive contact zones or having ultra high molecular weight polyethylene added to the plastic material, the liners being electro-fused when contacting each other due to the electro conductive properties of the added ultra high molecular weight polyethylene.

As another preferred step, the fusion of the two liners may be realized by pressing hot steam or hot fluid above fluidity temperature of the plastic material through pre-given fusion channels, said channels being formed at the contacting areas of said liners for example at the free ends of ribs, said channels running in longitudinal direction of said liners.

As another preferred embodiment of the invention, the two liners are glued or bonded together at the contacting areas after step g), beads of hot melt adhesives being preferred for glueing the liners together after hot steam is pressed into the liners, having a temperature above the fluidity temperature of the adhesive.

The ribs between the liners may be integrally formed at the inner surface of the first liner and/or at the outer surface of the second liner. The ribs extend preferably in longitudinal direction of the liners, they may however also extend in a circumferential or a helical direction around the liners.

It is preferred that the ribs have rectangular or trapezoidal or partly cylindrical cross-section, and the ribs may be intermittently arranged to provide interface between rib created voids. As the free ends of the ribs contact the outer surface of the second liner and the inner surface of the first liner respectively, the fusion means, as for example embedded wires or beads of hot melt adehesive are embedded at the free end of the ribs. Additionally, small channels can be provided in longitudinal direction at the free ends of the ribs for pressing hot steam of fluid through said channels to fuse the free ends of said ribs of one liner to the contacting surface of the other liner or to liquefy the hot melt adhesive provided there.

In a preferred step a curing compound is molded and injected in the grooves between the liners if additional strength and material is required with pre-given and selectable properties. As filler material fly ash, perlite or expanded stearine are preferred, but all other suitable compounds may be used as well.

It is within the scope of invention, that a third cylindrical liner may be introduced into the second liner in the same way as the second liner is introduced into the first liner. So as to increase the effective wall thickness even more. Between the third and the second liner a rib-structure may be provided, and the third liner may be integrally fixed to the second liner at the free ends of the ribs to enhance the strength and the lining properties.

### BRIEF DESCRIPTION OF THE DRAWINGS

Fig. 1 is a cross-section through a first liner in its deformed or collapsed configuration;
Fig. 2 shows the collapsed first liner introduced in a pipe;
Fig. 3 is a cross-section through a second liner to be introduced into the first liner.
Fig. 4 is a cross-section of a pipe, having the first liner partially opened, the second, collapsed liner being introduced in the partially opened first liner;
Fig. 5 is a cross-section similar to Fig. 4, the two liners being however restored in their cylindrical shape;
Fig. 6 showing the detail A of Fig. 5 in enlarged scale; and
Fig. 7 is an alternative of the detail A of Fig. 5.

Referring now to the drawings this invention is concerned with lining new and old pipe lines with two concentric liners which are pulled into the pipe line one after another; then, the second, i. e. inner liner is connected with the outer liner to provide one stable liner compound which is tightly fitted into the pipe line. The tubular liners can be made of any suitable plastic material which will collapse and subsequently return to its originally cross-section either by known historic time memory properties of the material or by the immanent elastic properties of the material.

To tightly fit in its reformated state into the pipe, the tubular liner has an exterior diameter at least as large as the interior diameter of the pipe into which it is to be inserted and preferably slightly in access of the pipe diameter in order that the tubular liner is under slight circumferential compression when it is in operating position in the pipe line.

Further, the second tubular liner which is to be inserted into the first liner has an original exterior overall diameter at least as large as the interior diameter of the first liner, so that the second tubular liner tightly fits in the first liner and is under slight circumferential compression in its operating position.

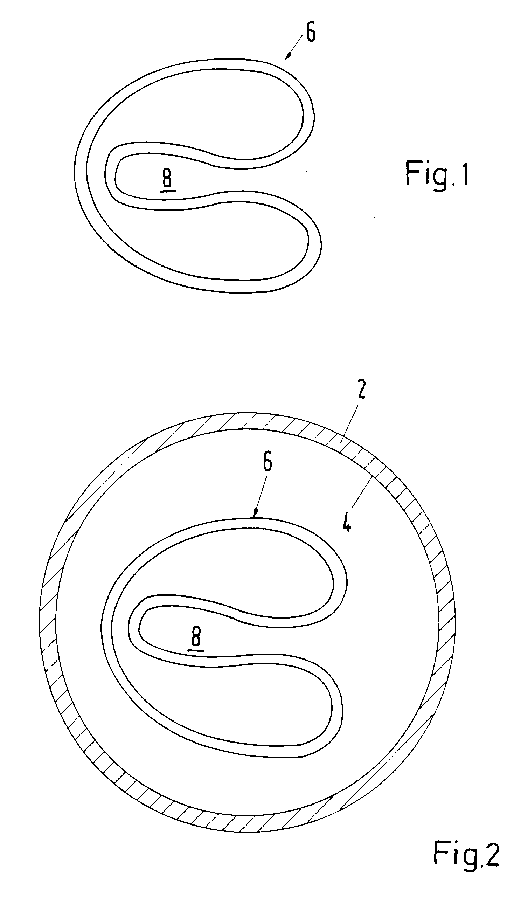

Referring now to Fig. 1 which shows a cross-section of the first tubular liner 6 in its deformed or collapsed state having reduced overall diameter as compared to the original diameter. In accordance with one preferred embodiment of the invention, the first liner is made of plastic material with historic time memory properties when using such material, the first liner 6 is deformed in the cross-section according to Fig. 1 by mechanically initiating and processing the fold 8 at a temperature range between the deforming point and the crystallization point of the material, i. e. for example between 75°C and 113°C. When the material is cooled down, the tubular first liner preserves its deformed shape, so that it can be pulled into a pipe line, cf. Fig. 2.

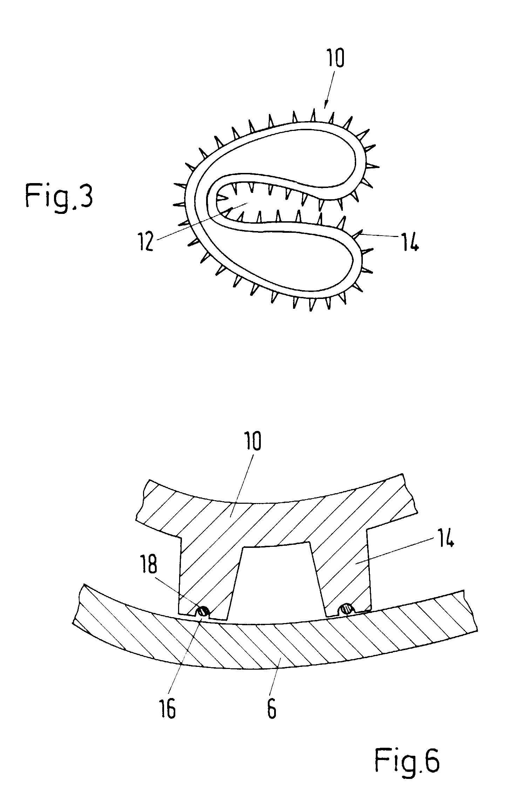

Referring now to Fig. 3, a second tubular liner 10 is provided having radially extending ribs 14 at its outside. The ribs 14 are uniformly spaced in radial direction, they extend longitudinally along the liner 10.

The original external overall diameter of the second liner, i. e. the diameter of the circumference connecting the free ends of the ribs, is selected such that it is preferably slightly larger than the inner diameter of the first liner 6.

Provided that the plastic material of the second liner has historic time memory effect, the deformation of the second liner according to Fig. 3 may also be realized by mechanically folding fold 12 at a temperature range between the deformation point and the crystallization point of the material. When the material is cooled down, the liner preserves its deformed shape.

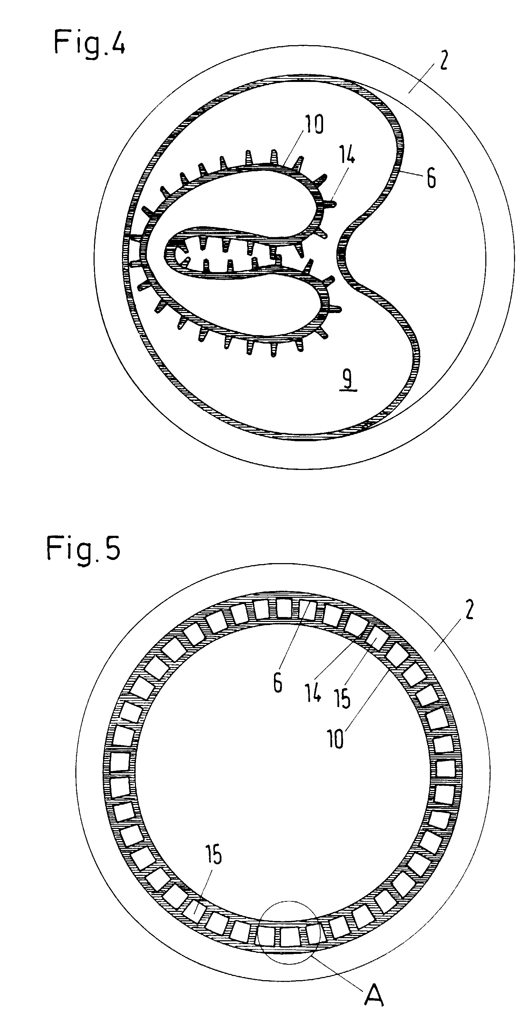

Referring to Fig. 4, the first liner 6 is partially opened as compared with Fig. 2. To partly open the first liner, hot steam or fluid is forced into the deformed liner, this steam or fluid having a temperature sufficient to obtain the average crystallization temperature of the plastic material so that the liner gradually returns to its original form. When the first liner is partially opened, cf. Fig. 4, the second, deformed liner is pulled into the first liner, cf. Fig. 4.

To restore both liners into its original form, hot steam or fluid is forced into the space 9 between the first and the second liner 6, 10, and this steam or fluid has a temperature sufficient to obtain an average crystallization temperature of the plastic material so that both liners 6, 10 return to their original shape by recrystallization.

When the original form is recovered, the first liner 6 tightly fits into the pipe 2, and the second liner 10 tightly fits into the first liner 6, both liners being under slight circumferential compression, cf. Fig. 5. To finalize this shape restoration, hot steam or fluid may additionally be forced into the second liner 10, to press the tubular liners 6, 10 radially to the pipe 2. In their restored shape both liners 6, 10 form one tubular liner arrangement having high rigidity and stability and double containment properties with longitudinal voids between the rib-structure.

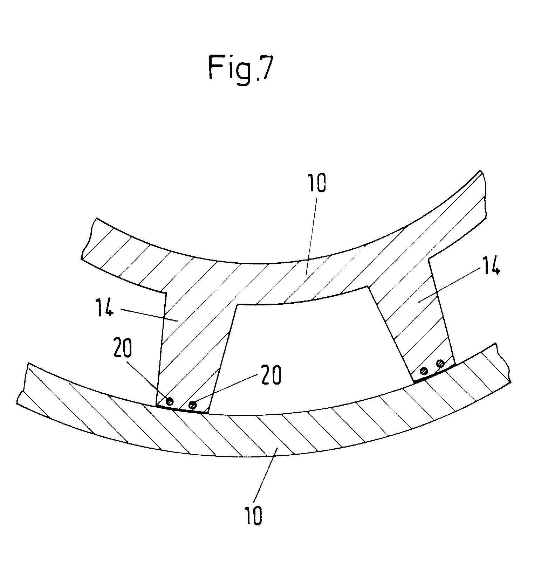

Referring now to Fig. 6 of the drawings, the ribs 14 have longitudinally extending channels 16 at their free ends, and there are provided beads of hot melt adhesive 18 in the channels. To finalize the installation, hot steam is forced through these channels 16 so that the adhesive melts, thus, glueing the first and the second liner 6, 10 together.

Alternatively, conducting wires 20 may be integrated at the free ends of the ribs 14, cf. Fig. 7. When the wires 20 are energized, electro-fusion takes place, and both liners are connected by electro-fusion. Alternatively, electro-conductive high molecular weight polyethylene might be added to the plastic material at least at the contacting areas of the two liners so that electro-fusion can be carried out by simply energizing the respective region electrically.

When both liners are connected together, a double containment, high stress resistant compound liner is realized with a minimum amount of material, and the longitudinal voids 15 between the ribs allow a fail-safe control. The holes become the conveyors of potential problems which may exist in the pipe line, double wall representation is a safety marging against the pipe lines internal bursting. Additionally, fibre-optic sensing systems can be installed in the voids to detect and pin-point leaks instantly. This system further allows for the up-grading of any ordinary harzardous liquid pipe line with one tubular liner to an extraordinary fail-safe pipe line simply by introducing the second liner having ribs at its outside.

When the liners are made of material with historic time memory effect, preferably the following plastic or thermosetting or thermoplastic materials may be used: polyethylene, PVC, modified PVC, polybuthylene, polyurethane, nylons etc.

Alternatively, the liners may be produced of elastic material, having spring rebounding properties and no historic time memory properties. The liners are then mechanically collapsed, and they are maintained in their collapsed configuration by a longitudinally extending tearable strap or element which is torn off after the liners are inserted in the pipe. To restore the liners, a pressurized fluid is forced into the respective liner which presses the liner radially outward in its original form.

## Claims

1. A method of lining a pipe comprising the following steps:
a) providing a cylindrical first tubular liner of plastic material, the external diameter of said first liner corresponding to the internal diameter of said pipe to be lined;
b) providing a cylindrical second tubular liner of plastic material for closely fitting into said first liner;
c) ribs extending radially between the inner surface of the first liner and the outer surface of the second liner for spacing said liners relative to each other in the pipe;
characterized by
d) deforming or collapsing the first and the second liner to reduced overall diameters;
e) introducing the first liner into the pipe;
f) introducing the second liner into the first liner;
g) restoring the cylindrical shapes of said liners in the pipe to bring the first liner into contact with the internal surface of the pipe, and the second liner via the ribs into contact with the first liner.

2. Method according to claim 1,
characterized in that at least one of the liners consists of plastic material having historic time memory properties,
deforming the liners in step d at or above deforming temperature and below crystallization temperature of the material,
and restoring the cylindrical shapes of the liner in the pipe by forcing hot steam or fluid along the liners, the temperature of the steam or fluid being sufficient to obtain an average crystallization temperature of the plastic material of the liners.

3. Method according to claim 2,
characterized in that the hot steam or fluid is forced into the space between the first and the second liner.

4. Method according to claim 2,
characterized by increasing pressure within the first and second liner to conform both liners to the interior contour of the pipe.

5. Method according to claims 1 to 4,
characterized in that hot steam or liquid sufficient to obtain an average crystallization temperature of the plastic material is forced into the first liner after its introduction into the pipe to partially widen the cross-section of the first liner for introduction of the second liner.

6. Method according to claim 1,
characterized in that at least one of the liners is of semi-rigid material,
collapsing the liners in step d by mechanically force so as to form at least one longitudinally extending depression thereby decreasing the overall diameter of the liners,
fixing a longitudinally extending tearable strap or element to or about the liners to maintain the collapsed configuration,
introducing the collapsed first liner into the pipe,
introducing the collapsed second liner into the first liner,
restoring the cylindrical shapes of the liners by releasing the strap.

7. Method according to claim 6,
characterized by increasing pressure in the first and in the second liner to restore the cylindrical shape of the liners.

8. Method according to claims 6 or 7,
characterized by releasing the strap of the first liner after its insertion into the pipe, and increasing pressure in the first liner before the second liner is introduced.

9. Method according to one of the preceding claims,
characterized in that the two liners are fused together after step g).

10. Method according to claim 9,
characterized in that the fusion of the two liners is an electro-fusion with wires embedded in the contact areas of said liners.

11. Method according to claim 9,
characterized in that the fusion is an electro-fusion using plastic material with electro-conductive resistive contact zones of said liners.

12. Method according to claim 9,
characterized in that ultra high molecular weight polyethylene is added to the plastic material and the liners are electro-fused when contacting each other.

13. Method according to claim 9,
characterized in that the fusion is realized by pressing hot steam or fluid above fluidity temperature of the plastic material through pre-given fusion channels at the contacting areas of said liners.

14. Method according to one of the claims 1 to 8,
characterized in that the two liners are glued together at contacting areas after step g).

15. Method according to one of the preceding claims,
characterized in that the ribs are integrally formed at the inner surface of the first liner.

16. Method according to one of the preceding claims,
characterized in that the ribs are integrally formed at the outer surface of the second liner.

17. Method according to claims 15 or 16,
characterized in that the ribs extend in longitudinal direction of the liners.

18. Method according to claims 15 and 16,
characterized in that the ribs extend in circumferential direction of the liners.

19. Method according to one of the claims 15 to 18,
characterized in that the ribs run helically around the liners.

20. Method according to one of the claims 15 to 19,
characterized in that the ribs have a rectangular cross-section.

21. Method according to one of the claims 1 to 19,
characterized in that the ribs have a trapezoidal or cylindrical cross-section.

22. Method according to one of the preceding claims,
characterized in that the ribs are intermittently arranged to provide interfaces between rib created voids.

23. Method according to one of the claims 15 to 22,
characterized in that fusion means is provided at the free ends of the ribs which contact the outer surface of the second liner and the inner surface of the first liner, respectively.

24. Method according to claim 23,
characterized in that the fusion means include wires embedded at the free ends of the ribs for electrofusing the ribs of one liner with the other liner.

25. Method according to claim 23,
characterized in that the fusion means include channels in longitudinal direction at the free ends of the ribs for pressing hot steam or fluid through said channels to fuse free ends of said ribs of one liner to the contacting surface of the outer liner.

26. Method according to claims 23 to 25,
characterized in that hot melt adhesive is provided at the free ends of the ribs for joining the ribbed liner with the non-ribbed liner.

27. Method according to one of the claims 1 to 23,
characterized in that the two liners include snapping means for mechanically joining both liners.

28. Method according to one of the preceding claims,
characterized in that a curing compound is molded and injected in the grooves between the liners.

29. Method according to one of the preceding claims,
characterized in that control means are provided in the grooves between the liners for controlling the condition of the inner liner.

30. Method according to one of the preceding claims,
characterized in that a third cylindrical liner is forcibly collapsed and introduced into the second liner, said third liner being of plastic material having shape memory properties and being returned to the cylindrical shape by forcing of steam through the collapsed third liner.

## Patentansprüche

1. Verfahren zum Innenauskleiden eines Rohres mit den folgenden Schritten:
a) Vorsehen einer ersten zylindrischen rohrartigen Innenauskleidung aus Plastik, deren Außendurchmesser dem Innendurchmesser des innenauszukleidenden Rohres entspricht;
b) Vorsehen einer zweiten zylindrischen rohrartigen Innenauskleidung aus Plastik zum dichten Einpassen in die erste Innenauskleidung;
c) Rippen, die sich radial zwischen der inneren Oberfläche der ersten Innenauskleidung und der äußeren Oberfläche der zweiten Innenauskleidung zum Beabstanden der Innenauskleidungen im Rohr relativ zueinander erstrecken;
gekennzeichnet durch
d) Deformieren oder Zusammendrücken der ersten und der zweiten Innenauskleidung auf einen verkleinerten Außendurchmesser;
e) Einführen der ersten Innenauskleidung in das Rohr;
f) Einführen der zweiten Innenauskleidung in die erste Innenauskleidung;
g) Wiederherstellen der zylindrischen Form der Innenauskleidungen in dem Rohr, um die erste Innenauskleidung in Kontakt mit der inneren Oberfläche des Rohres zu bringen und die zweite Innenauskleidung über die Rippen in Kontakt mit der ersten Innenauskleidung zu bringen.

2. Verfahren nach Anspruch 1,
dadurch gekennzeichnet, daß zumindest eine der Innenauskleidungen aus Plastikmaterial besteht, welches Formgedächtnis-(historic time memory-)Eigenschaften hat,
Deformieren der Innenauskleidungen in Schritt d) bei oder oberhalb der Verformungstemperatur und unterhalb der Kristallisationstemperatur des Materials,
und Wiederherstellen der zylindrischen Formen der Innenauskleidungen in dem Rohr durch Einleiten von heißem Dampf oder heißem Fluid entlang der Innenauskleidungen, wobei die Temperatur des Dampfes oder der Flüssigkeit ausreicht, um eine durchschnittliche Kristallisationstemperatur des Kunststoffmaterials der Innenauskleidungen zu erreichen.

3. Verfahren nach Anspruch 2,
dadurch gekennzeichnet, daß der heiße Dampf oder das heiße Fluid in den Zwischenraum zwischen der ersten und der zweiten Innenauskleidung eingeleitet wird.

4. Verfahren nach Anspruch 2,
gekennzeichnet durch Vergrößern des Druckes der ersten und zweiten Innenauskleidung, um die beiden Innenauskleidungen an die Innenkontur des Rohres anzupassen.

5. Verfahren nach Anspruch 1 bis 4,
dadurch gekennzeichnet, daß ausreichend heißer Dampf oder heiße Flüssigkeit zum Erreichen einer durchschnittlichen Kristallisationstemperatur des Plastikmaterials in die erste Innenauskleidung eingebracht wird, nachdem diese in das Rohr eingeführt wurde, um den Querschnitt der ersten Innenauskleidung zum Einführen der zweiten Innenauskleidung teilweise aufzuweiten.

6. Verfahren nach Anspruch 1,
dadurch gekennzeichnet, daß zumindest eine der Innenauskleidungen aus halbsteifem Material besteht,
Zusammendrücken der Innenauskleidungen in Schritt d) durch mechanische Kraft, um zumindest eine sich längserstreckende Vertiefung zu bilden und dadurch den Außendurchmesser der Auskleidungen zu verkleinern,
Befestigen eines sich längserstreckenden, abziehbaren Streifens oder Elementes an oder um die Innenauskleidungen, um deren kollabierten Zustand zu erhalten,
Einführen der ersten zusammengedrückten Innenauskleidung in das Rohr,
Einführen der zweiten zusammengedrückten Innenauskleidung in die erste Innenauskleidung,
Wiederherstellen der zylindrischen Formen der Innenauskleidungen durch Abziehen des Streifens.

7. Verfahren nach Anspruch 6,
gekennzeichnet durch Vergrößern des Drucks in der ersten und in der zweiten Innenauskleidung zum Wiederherstellen der zylindrischen Form der Innenauskleidungen.

8. Verfahren nach Anspruch 6 oder 7,
gekennzeichnet durch Abziehen des Streifens der ersten Innenauskleidungen nach deren Einsetzen in das Rohr und Vergrößern des Drucks in der ersten Innenauskleidung, bevor die zweite Innenauskleidung eingeführt wird.

9. Verfahren nach einem der vorhergehenden Ansprüche,
dadurch gekennzeichnet, daß die zwei Innenauskleidungen nach Schritt g) miteinander verschweißt werden.

10. Verfahren nach Anspruch 9,
dadurch gekennzeichnet, daß das Verschweißen der zwei Innenauskleidungen ein Elektroschweißen mittels Drähten ist, die in die Berührungszonen der Innenauskleidungen eingebettet sind.

11. Verfahren nach Anspruch 9,
dadurch gekennzeichnet, daß das Verschweißen ein Elektroschweißen unter Verwendung von Kunststoffmaterial mit elektrisch leitenden widerstandsbehafteten Kontaktzonen der Innenauskleidungen ist.

12. Verfahren nach Anspruch 9,
dadurch gekennzeichnet, daß Polyäthylen ultrahohen Molekulargewichts dem Plastikmaterial beigefügt wird und die Innenauskleidungen elektrisch verschweißt werden, wenn sie einander berühren.

13. Verfahren nach Anspruch 9,
dadurch gekennzeichnet, daß das Verschweißen durchgeführt wird, indem heißer Dampf oder heißes Fluid mit einer Temperatur oberhalb der Schmelztemperatur des Kunststoffmaterials durch vorgegebene Schmelzkanäle in den Berührungszonen der Innenauskleidungen hindurchgeleitet wird.

14. Verfahren nach einem der Ansprüche 1 bis 8,
dadurch gekennzeichnet, daß die zwei Innenauskleidungen nach Schritt g) in Kontaktzonen zusammengeklebt werden.

15. Verfahren nach einem der vorhergehenden Ansprüche,
dadurch gekennzeichnet, daß die Rippen an der inneren Oberfläche der ersten Innenauskleidung integral angeformt sind.

16. Verfahren nach einem der vorhergehenden Ansprüche,
dadurch gekennzeichnet, daß die Rippen an der äußeren Oberfläche der zweiten Innenauskleidung integral angeformt sind.

17. Verfahren nach Anspruch 15 oder 16,
dadurch gekennzeichnet, daß sich die Rippen in Längsrichtung der Innenauskleidungen erstrecken.

18. Verfahren nach Anspruch 15 und 16,
dadurch gekennzeichnet, daß sich die Rippen in Umfangsrichtung der Innenauskleidungen erstrecken.

19. Verfahren nach einem der Ansprüche 15 bis 18,
dadurch gekennzeichnet, daß die Rippen helixförmig um die Innenauskleidungen herum verlaufen.

20. Verfahren nach einem der Ansprüche 15 bis 19,
dadurch gekennzeichnet, daß die Rippen einen rechtwinkligen Querschnitt haben.

21. Verfahren nach einem der Ansprüche 1 bis 19,
dadurch gekennzeichnet, daß die Rippen eine trapezförmige oder eine zylindrische Querschnittsform haben.

22. Verfahren nach einem der vorhergehenden Ansprüche,
dadurch gekennzeichnet, daß die Rippen unterbrochen angeordnet sind um Verbindungen zwischen von den Rippen erzeugten Leerräumen zu bieten.

23. Verfahren nach einem der Ansprüche 15 bis 22,
dadurch gekennzeichnet, daß Schweißmittel an den freien Enden der Rippen vorgesehen sind, welche die äußere Oberfläche der zweiten Innenauskleidung bzw. die innere Oberfläche der ersten Innenauskleidung berühren.

24. Verfahren nach Anspruch 23,
dadurch gekennzeichnet, daß die Schweißmittel Drähte einschließen, die in die freien Enden der Rippen eingebettet sind, um die Rippen der einen Innenauskleidung mit der anderen Innenauskleidung elektrozuverschweißen.

25. Verfahren nach Anspruch 23,
dadurch gekennzeichnet, daß die Schweißmittel Kanäle in Längsrichtung an den freien Enden der Rippen umfassen, um heißen Dampf oder heißes Fluid durch die Kanäle zu leiten, um die freien Enden der Rippen einer Innenauskleidung auf die kontaktierende Oberfläche der äußeren Innenauskleidung zu schweißen.

26. Verfahren nach einem der Ansprüche 23 bis 25,
dadurch gekennzeichnet, daß an den freien Enden der Rippen Heißschmelzkleber zum Verbinden der mit Rippen versehenen Innenauskleidung mit der nicht mit Rippen versehenen Innenauskleidung vorgesehen ist.

27. Verfahren nach einem der Ansprüche 1 bis 23,
dadurch gekennzeichnet, daß die beiden Innenauskleidungen Rastmittel zum mechanischen Verbinden der Innenauskleidungen umfassen.

28. Verfahren nach einem der vorhergehenden Ansprüche,
dadurch gekennzeichnet, daß eine aushärtende Komponente in die Vertiefungen zwischen den Innenauskleidungen eingeformt und eingespritzt ist.

29. Verfahren nach einem der vorhergehenden Ansprüche,
dadurch gekennzeichnet, daß Kontrollmittel in den Vertiefungen zwischen den Innenauskleidungen vorgesehen sind, um den Zustand der inneren Innenauskleidung zu überwachen.

30. Verfahren nach einem der vorhergehenden Ansprüche,
dadurch gekennzeichnet, daß eine dritte zylindrische Innenauskleidung unter Kraft zusammengedrückt wird und in die zweite Innenauskleidung eingeführt wird, wobei die dritte Innenauskleidung aus Kunststoff mit Formgedächtnis-Eigenschaften besteht und in die zylindrische Form zurückkehrt, indem Dampf durch die zusammengedrückte dritte Innenauskleidung geleitet wird.

## Revendications

1. Procédé de chemisage d'un tuyau, comprenant les étapes qui consistent à :
a) mettre à disposition un premier fourreau tubulaire cylindrique en matière plastique, le diamètre extérieur dudit premier fourreau correspondant au diamètre intérieur dudit tuyau à chemiser ;
b) mettre à disposition un deuxième fourreau tubulaire cylindrique en matière plastique destiné à entrer en ajustement serré dans ledit premier fourreau ;
c) des nervures s'étendant dans la direction radiale entre la surface intérieure du premier fourreau et la surface extérieure du deuxième fourreau, pour écarter lesdits fourreaux l'un par rapport à l'autre dans le tuyau ;
caractérisé par les étapes qui consistent à :
d) déformer ou écraser le premier et le deuxième fourreaux pour en réduire le diamètre global ;
e) introduire le premier fourreau dans le tuyau ;
f) introduire le deuxième fourreau dans le premier fourreau ;
g) redonner leur forme cylindrique auxdits fourreaux se trouvant dans le tuyau, pour amener le premier fourreau en contact avec la surface intérieure du tuyau, et le deuxième fourreau en contact avec le premier fourreau par l'intermédiaire des nervures.

2. Procédé selon la revendication 1,
caractérisé en ce qu'au moins l'un des fourreaux est constitué d'une matière plastique ayant des propriétés de mémoire des caractéristiques historiques,
et par les étapes qui consistent à :
déformer les fourreaux à l'étape d) à une température égale ou supérieure à la température de déformation et inférieure à la température de cristallisation du matériau.
et redonner leur forme cylindrique aux fourreaux se trouvant dans le tuyau en introduisant en force de la vapeur chaude ou un fluide chaud le long des fourreaux, la température de la vapeur ou du fluide étant suffisante pour obtenir une température de cristallisation moyenne de la matière plastique des fourreaux.

3. Procédé selon la revendication 2,
caractérisé en ce que la vapeur chaude ou le fluide chaud est introduit en force dans l'espace situé entre le premier et le deuxième fourreaux.

4. Procédé selon la revendication 2,
caractérisé par le fait d'augmenter la pression à l'intérieur du premier et du deuxième fourreaux pour que les fourreaux prennent la forme du contour intérieur du tuyau.

5. Procédé selon les revendications 1 à 4,
caractérisé en ce que la vapeur chaude ou le fluide chaud, suffisant à obtenir une température de cristallisation moyenne de la matière plastique, est introduit en force dans le premier fourreau après qu'il a été introduit dans le tuyau, pour agrandir partiellement la section transversale du premier fourreau afin d'y introduire le deuxième fourreau.

6. Procédé selon la revendication 1,
caractérisé en ce qu'au moins l'un des fourreaux est constitué d'un matériau semi-rigide,
et par les étapes qui consistent à :
écraser les fourreaux à l'étape d) à l'aide d'une force mécanique, de façon à former au moins une dépression s'étendant dans la direction longitudinale, en diminuant de ce fait le diamètre global des fourreaux,
fixer aux fourreaux, ou autour d'eux, un élément ou une bande déchirable s'étendant dans la direction longitudinale, pour maintenir la configuration écrasée,
introduire le premier fourreau écrasé dans le tuyau,
introduire le deuxième fourreau écrasé dans le premier fourreau,
redonner leur forme cylindrique aux fourreaux en enlevant les bandes.

7. Procédé selon la revendication 6,
caractérisé par le fait d'augmenter la pression dans le premier et dans le deuxième fourreaux pour redonner leur forme cylindrique aux fourreaux.

8. Procédé selon la revendication 6 ou 7,
caractérisé par le fait d'enlever la bande du premier fourreau après son insertion dans le tuyau, et d'augmenter la pression dans le premier fourreau avant que le deuxième fourreau y soit introduit.

9. Procédé selon l'une des revendications précédentes,
caractérisé en ce que les deux fourreaux sont fusionnés ensemble après l'étape g).

10. Procédé selon la revendication 9,
caractérisé en ce que la fusion des deux fourreaux est une électro-fusion, avec des fils métalliques enfoncés dans les zones de contact desdits fourreaux.

11. Procédé selon la revendication 9,
caractérisé en ce que la fusion est une électro-fusion à l'aide d'une matière plastique, les zones de contact desdits fourreaux étant résistives et électro-conductrices.

12. Procédé selon la revendication 9,
caractérisé en ce que l'on ajoute du polyéthylène, très haut poids moléculaire à la matière plastique, et en ce que les fourreaux sont fusionnés par électro-fusion lorsqu'ils entrent en contact l'un avec l'autre.

13. Procédé selon la revendication 9,
caractérisé en ce que la fusion est réalisée par introduction sous pression d'une vapeur chaude ou d'un fluide chaud, à une température supérieure à la température de fluage de la matière plastique, au travers de canaux de fusion préalablement aménagés au niveau des zones de contact desdits fourreaux.

14. Procédé selon l'une des revendications 1 à 8,
caractérisé en ce que les deux fourreaux sont collés ensemble au niveau des zones de contact, après l'étape g).

15. Procédé selon l'une des revendications précédentes,
caractérisé en ce que les nervures font partie intégrante de la surface intérieure du premier fourreau.

16. Procédé selon l'une des revendications précédentes,
caractérisé en ce que les nervures font partie intégrante de la surface extérieure du deuxième fourreau.

17. Procédé selon la revendication 15 ou 16,
caractérisé en ce que les nervures s'étendent dans la direction longitudinale des fourreaux.

18. Procédé selon les revendications 15 et 16,
caractérisé en ce que les nervures s'étendent dans la direction circonférentielle des fourreaux.

19. Procédé selon l'une des revendications 15 à 18,
caractérisé en ce que les nervures courent hélicoïdalement autour des fourreaux.

20. Procédé selon l'une des revendications 15 à 19,
caractérisé en ce que les nervures ont une section transversale rectangulaire.

21. Procédé selon l'une des revendications 1 à 19,
caractérisé en ce que les nervures ont une section transversale trapézoïdale ou cylindrique.

22. Procédé selon l'une des revendications précédentes,
caractérisé en ce que les nervures sont disposées de manière intermittente pour réaliser des interfaces entre les vides créés par les nervures.

23. Procédé selon l'une des revendications 15 à 22,
caractérisé en ce qu'il est prévu aux extrémités libres des nervures des moyens de fusion qui entrent en contact avec, respectivement, la surface extérieure du deuxième fourreau et la surface intérieure du premier fourreau.

24. Procédé selon la revendication 23,
caractérisé en ce que les moyens de fusion comprennent des fils métalliques enfoncés dans les extrémités libres des nervures pour fusionner les nervures de l'un des fourreaux avec l'autre fourreau par électro-fusion.

25. Procédé selon la revendication 23,
caractérisé en ce que les moyens de fusion comprennent des canaux aménagés dans la direction longitudinale au niveau des extrémités libres des nervures, pour introduire sous pression une vapeur chaude ou un fluide chaud au travers desdits canaux, pour fusionner lesdites extrémités libres des nervures de l'un des fourreaux à la surface de contact du fourreau extérieur.

26. Procédé selon les revendications 23 à 25,
caractérisé en ce qu'un adhésif thermofusible est prévu aux extrémités libres des nervures, pour joindre le fourreau nervuré au fourreau non nervuré.

27. Procédé selon l'une des revendications 1 à 23,
caractérisé en ce que les deux fourreaux comprennent des moyens d'attache rapide pour joindre mécaniquement les deux fourreaux.

28. Procédé selon l'une des revendications précédentes,
caractérisé en ce qu'un composé de durcissement est moulé et injecté dans les gorges situées entre les fourreaux.

29. Procédé selon l'une des revendications précédentes,
caractérisé en ce que des moyens de régulation sont prévus dans les gorges situées entre les fourreaux, pour réguler l'état du fourreau intérieur.

30. Procédé selon l'une des revendications précédentes,
caractérisé en ce qu'un troisième fourreau cylindrique est écrasé par la force et introduit dans le deuxième fourreau, ledit troisième fourreau étant constitué d'une matière plastique à mémoire de forme, et étant ramené à sa forme cylindrique par l'introduction de vapeur au travers du troisième fourreau écrasé.
